# EUROPEAN PATENT SPECIFICATION

(11) **EP 1 914 154 B1**
(45) Date of publication and mention of the grant of the patent: **19.01.2011**
(21) Application number: 06782302.1
(22) Date of filing: 28.07.2006
(51) Int. Cl.: B62D 55/125, B60K 7/00, E02F 9/02, F16D 55/00, F16D 65/21, F16J 15/16, H02K 7/116

(54) **Drum rotation device for construction machine**
Trommeldrehvorrichtung für eine Baumaschine
Dispositif de rotation de tambour pour engin de chantier

(30) Priority: 01.08.2005 JP 2005223163
(43) Date of publication of application: 23.04.2008
(73) Proprietor: Hitachi Construction Machinery Co., Ltd., Tokyo 112-0004 (JP); Hitachi Industrial Equipment Systems Co., Ltd., Chiyoda-ku Tokyo 101-0022 (JP)
(72) Inventor: UZAWA, Nobuo, Tsuchiura-shi, Ibaraki, 3000013 (JP); TANAKA, Atsushi, Tsuchiura-shi, Ibaraki, 3000013 (JP); OCHIAI, Masami, Tsuchiura-shi, Ibaraki, 3000013 (JP); SHIMOZONO, Tadahiro, Narashino-shi, Chiba 2750001 (JP); JOJIMA, Yoshiomi, Narashino-shi, Chiba 2750001 (JP); OBATA, Takeshi, Narashino-shi, Chiba 2750001 (JP)
(74) Representative: MERH-IP Matias Erny Reichl Hoffmann
(86) International application number: PCT/JP2006/315442
(87) International publication number: WO 2007/015554

(56) References cited:
- WO-A-99/59852
- DE-A1- 10 331 186
- GB-A- 2 389 827
- JP-A- 09 240 525
- JP-A- 2002 321 665
- JP-A- 2005 104 216
- JP-U- 60 084 857
- US-A- 5 928 099
- US-A1- 2004 112 656

## Description

### TECHNICAL FIELD

This invention relates to a drum rotating apparatus particularly suitable for use in a construction machine, for example, a vehicle drive unit for a hydraulic excavator, a hydraulic crane or a rope winch drum.

### BACKGROUND ART

Generally, vehicle drive units of construction machines such as hydraulic excavators, wheel loaders and the like employ a drum rotating apparatus for rotating a drum member on which a sprocket is mounted, for driving a crawler belt or for rotating a drum member on which a vehicle wheel is mounted. Also, a drum rotating apparatus is used on a rope winch which is mounted, for example, on a hydraulic crane for winding and unwinding a rope by rotating a drum member (e.g., see, for example, Japanese Patent Laid-Open No. 2000-9017, H1-153840 and S60-183498).

In this instant, the prior art drum rotating apparatuses are largely constituted by a hydraulic motor serving as a drive source, a reducing mechanism which is located on the inner peripheral side of a drum member for reducing the speed in transmitting rotation of the hydraulic motor to the drum member, and a coupling shaft which couples an output shaft of the hydraulic motor with the reducing mechanism. In the drum rotating apparatus of this sort, a drum member is rotated with a large torque by reducing the speed of rotation of a hydraulic motor through a reducing mechanism.

Further, normally, a drum rotating apparatus of this sort is provided with a negative type wet multiple disc brake, applying the brakes to the coupling shaft when the hydraulic motor is at rest and taking the brakes off when the hydraulic motor is in rotation. Usually, a wet type multiple disc brake of a compact form is provided on the inner peripheral side of a drum member along with a reducing mechanism for compactification of a drum rotating apparatus as a whole.

In the above-mentioned prior art, the hydraulic motor which is provided in the drum rotating apparatus rotate an output shaft by supplying pressure oil from a hydraulic pump which is driven by an engine. Therefore, there has been a serious problem of pollution of environments by exhaust gases emanated from an engine during a drum rotating apparatus is in operation, in addition to a problem that a working environment is degraded to a considerable degree by operational noises of the engine.

In this regard, there has been developed and in use a drum rotating apparatus using an electric motor in place of a hydraulic motor as a drive source. In a drum rotating apparatus of this type, an electric motor is driven by power supplied from a power source like a battery, for the purpose of suppressing emissions of exhaust gases and operational noises (e.g., see, for example Japanese Patent Laid-Open No. H11-155256).

In this connection, in the case of a drum rotating apparatus driven by an electric motor, it is desirable to use a negative type dry electromagnetic brake instead of a wet multiple disc brake from the standpoint of effectively use of a power source like a battery.

However, in the case of an electric motor-driven drum rotating apparatus having lubricant oil within a drum member along with a reducing mechanism, difficulties are encountered in mounting a negative type dry electromagnetic brake on the inner peripheral side of a drum in a compact form, in a complete shielded state from inflammable lubricant oil.

In document US 2004/112656 A1, which discloses the preamble of claim 1, a DC motor is provided in an outer section of a hub. The rotation of the motor is transmitted to a ring and a wheel through a planetary speed reducer assembly. In this case, an annular dust seal as a first seal member is provided between the outer section of the hub and the ring. An oil seal as a second seal member is provided between a shaft and a hub section.

In document WO 99/5982 A, a brake assembly for a vehicle comprising brake discs which are fixed to the brake calliper and being in fixed rotational relation and displaceable axial relation of a wheel hub is disclosed. Brake pads arc comprised to apply a braking force to the wheel hub by being pressed axially toward the brake discs by the brake calliper.

Document US 5 928 099 recites a crawler drive unit which transmits the rotation of a hydraulic motor to a supporting member by reducing the speed of rotation through a planetary gear set and drives a crawler belt by a sprocket mounted on the supporting member.

### DISCLOSURE OF THE INVENTION

In view of the above-discussed problems with the prior art, it is an object of the present invention to provide a drum rotating apparatus for a construction machine, having a negative type dry electromagnetic brake accommodated inside of the inner periphery of a drum member in a compact form and in a shielded state from lubricant oil.
(1) According to the present invention, in order to achieve the above-stated objective, there is provided a drum rotating apparatus for use on a construction machine, which is characterized by the provision of:
   a support member of a tubular shape, open at one axial end and closed with a lid portion at the other axial end thereof, the support member being securely fixed on a basis of a construction machine; an electric motor located at one axial end of the support member, the electric motor having an output shaft extended axially toward the support member and being connected to an external power supply to rotate the output shaft; a drum member of a tubular shape, open at one axial end and closed at the other axial end thereof, the drum member being rotatably supported on outer peripheral side of the support member at one axial end through bearings; a reduction gear mechanism immersed in a lubricant oil within the drum member, the reduction gear mechanism having a single or multiple reduction stages to rotate the drum member at a reduced speed; a coupling shaft extended axially in and through the support member, the coupling shaft having one axial end connected to the output shaft of the electric motor and the other axial end rotatably supported in the lid portion of the support member and coupled with the reduction gear mechanism; a negative type dry electromagnetic brake accommodated in the support member to apply the brakes to the coupling shaft when the electric motor is at rest and take the brakes off to the coupling shaft when the electric motor is in rotation; a first seal member forming a liquid tight seal between the support member and an opening at one axial end of the drum member; and a second seal member forming a liquid tight seal between the lid portion of the support member and the coupling shaft.

With the arrangements just described, an interstice between the support member and an opening at one axial end of the drum member is sealed up liquid tight by the first seal member, while an interstice between the lid portion of the support member and the coupling shaft is sealed up liquid tight by the second seal member, shielding the negative type dry electromagnetic brake within the support member from the lubricant oil in the drum member. Thus, by the use of a dry electromagnetic brake, brakes can be applied to the coupling shaft when the electric motor is at rest and take the brakes off the coupling shaft when the electric motor is in rotation.

Besides, the dry electromagnetic brake, shielded from the lubricant oil, is accommodated in a compact form within the support member which the electric motor and the reduction gear mechanism are provided, making it possible to compactify the entirety of the drum rotating apparatus incorporating the dry electromagnetic brake.
(2) According to the present invention, a couple of the dry electromagnetic brakes are provided in spaced positions in the axial direction of the coupling shaft.

By a couple of the dry electromagnetic brakes which are located within the support member, in spaced positions in the axial direction of the coupling shaft, a large braking force can be applied to the coupling shaft, holding the drum member standstill when the electric motor is at rest. In this case, a free heat releasing space can be formed between the two dry electromagnetic brakes. Therefore, heat which is generated as a result of excitation of the dry electromagnetic brakes can be efficiently released into the heat releasing space between the two brakes. This contributes to enhance durability of the dry electromagnetic brakes and reliability of the drum rotating apparatus as well.
(3) According to the present invention, a couple of the dry electromagnetic brakes are adapted to be assembled into the support member commonly in the same direction toward the lid portion through and from the side of an opening at one axial end of the support member.

With the arrangements just described, the two dry electromagnetic brakes can be assembled into the support member in the same direction from and through an opening at one axial end of the support member. This permits to assemble the dry electromagnetic brakes into the support member in an efficient manner.
(4) According to the present invention, the coupling shaft is composed of a coupling having one axial end connected to the output shaft of the electric motor and provided with a spline on the outer periphery thereof, and an input shaft having one axial end connected to the coupling and the other axial end connected to the reduction gear mechanism; the dry electromagnetic brake being comprised of a rotatable disc meshed with the spline of the coupling for rotation therewith, an non-rotatable disc adapted to be brought into and out of frictional engagement with the rotatable disc by a displacement in an axial direction of the coupling, and an electromagnetic coil excited by a power supply from outside to disengage the non-rotatable disc from the rotatable disc.

In this manner, the coupling shaft which couples the output shaft of the electric motor with the reduction gear mechanism is constituted by a coupling and an input shaft. Therefore, for example, after connecting the input shaft with the reduction gear mechanism, the input shaft can be easily connected with the output shaft of the electric motor by the coupling. Thus, the output shaft of the electric motor can be coupled with the reduction gear mechanism in an efficient manner.
(5) On the other hand, according to the present invention, the drum rotating apparatus further comprising a connector accommodation room provided upward of the dry electromagnetic brake within the support member fixed on the basis, and a connector mounted in the connector accommodation room to connect external wiring to internal wiring leading to the dry electromagnetic brake.

With the arrangements just described, even if rain water should get into the support member through an interstice between the support member and the electric motor, the connector can be kept out of contact with rain water to guarantee higher reliability of the electromagnetic brake.
(6) Further, according to the present invention, the basis constitutes a truck frame of a crawler type lower structure of the construction machine, the drum member is provided with a sprocket fixedly on the outer periphery thereof for meshing engagement with a crawler belt, and both of the electric motor and the reduction gear mechanism are located within a width of the crawler belt in transverse direction.

In case the drum rotating apparatus is applied to a vehicle drive unit of a crawler type vehicle, for example, both of the electric motor and the reduction gear mechanism can be located within the width of a crawler belt, without being projected on the outer side. Therefore, when the crawler type vehicle is traveling on a rough terrain, the electric motor and the reduction gear mechanism can be protected from rocks or other obstacles to guarantee higher reliability of the vehicle drive unit.

### BRIEF DESCRIPTION OF THE DRAWINGS

In the accompanying drawings:
Fig. 1 is a front elevation of a hydraulic excavator with a vehicle drive unit incorporating a drum rotating apparatus according to a first embodiment of the present invention;
Fig. 2 is an outer view of a truck frame and a vehicle drive unit of the hydraulic excavator;
Fig. 3 is a sectional view of the vehicle drive unit shown in Fig. 2;
Fig. 4 is an enlarged sectional view showing essential parts such as a support member, an electric motor, a planetary reduction gear mechanism and dry type electromagnetic brakes;
Fig. 5 is a sectional view of the dry type electromagnetic brakes in a position for applying the brakes to an output shaft;
Fig. 6 is a sectional view of the dry type electromagnetic brakes in a position for taking the brakes off the output shaft;
Fig. 7 is an enlarged sectional view similar to Fig. 4 but showing a vehicle drive unit incorporating a drum rotating apparatus according to an embodiment not forming part of the present invention; and
Fig. 8 is a sectional view similar to Fig. 5 but showing essential parts of a second embodiment of the present invention.

### BEST MODE FOR CARRYING OUT THE INVENTION

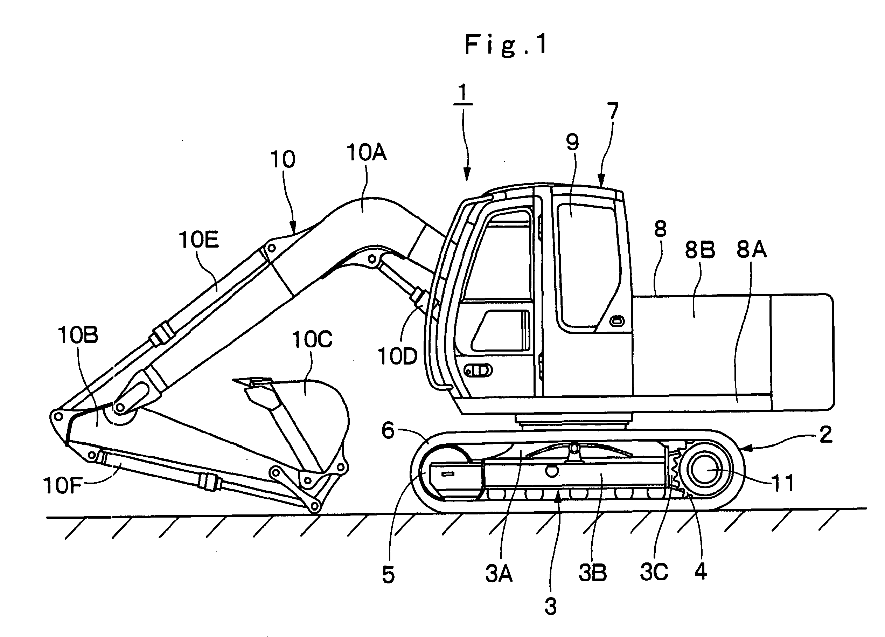

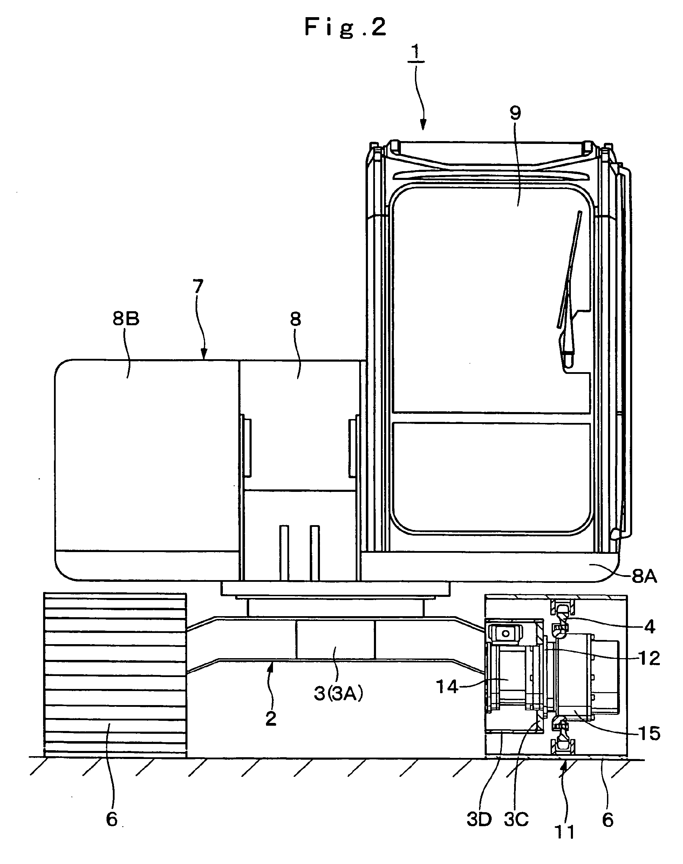

Hereafter, with reference to Figs. 1 through 8, the drum rotating apparatus of the construction machine according to the present invention is described more particularly by way of its preferred embodiments applied by way of example to a hydraulic excavator with electric-powered vehicle drive units.

Referring to Figs. 1 through 6, there is shown a first embodiment of the present invention. In these figures, indicated at 1 is an electric-motorized hydraulic excavator. This electric-motorized hydraulic excavator 1 is largely constituted by an automotive lower structure 2 and an upper revolving structure 7 which is rotatably mounted on the lower structure 2 which will be described hereinafter.

In this instance, the lower structure 2 is provided with a truck frame 3 which is composed of a center frame 3A and right and left side frames 3B. The truck frame 3 of this embodiment constitutes a basis of the hydraulic excavator 1. An endless crawler belt 6 is wrapped around a sprocket 4 and an idler 5 which are provided at rear and front ends of each side frame 3B, respectively.

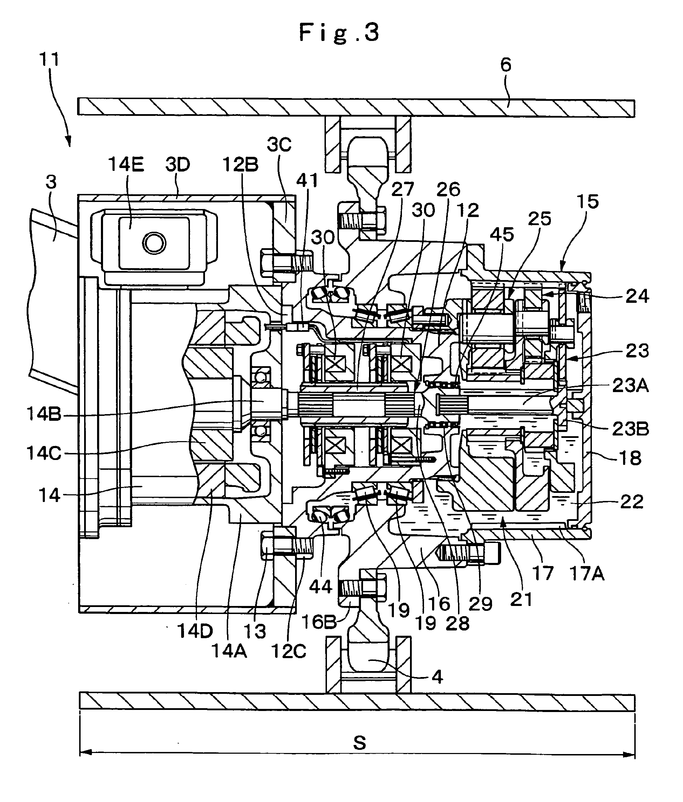

Further, as shown in Figs. 1 and 3, brackets 3C are projected from the rear end of the side frame 3B for mounting a support member 12 which will be described hereinafter. For covering an electric motor 14 which will be described later on, a motor cover 3D is fitted on the outer periphery of the brackets 3C.

Indicated at 7 is an upper revolving structure which is mounted on the lower structure 2. The upper revolving structure 7 is largely constituted by a housing 8 and a cab 9. In this instance, the housing 8 is largely constituted by a swing frame 8A which is rotatably mounted on the truck frame 3, and a housing cover 8B which is provided on the swing frame 8A to accommodate a battery, an electric motor, a hydraulic pump, an operating oil tank and so forth (none of which is shown in the drawings). The cab 9 is built on a left front portion of the swing frame 8A, defining an operating room thereon.

Denoted at 10 is a working mechanism, i.e., a lifting boom mechanism, which is supported on a front portion of the upper revolving structure 7. The front working mechanism 10 is constituted by a boom 10A which is pivotally supported on the swing frame 8A at its a base end through a pin, an arm 10B which is pivotally connected to a fore distal end of the boom 10A through a pin, a bucket 10C which is pivotally supported on a fore distal end of the arm 10B through a pin, a boom cylinder 10D, an arm cylinder 10E and a bucket cylinder 10F.

At the time of an excavating ground work, for example, operating pressure oil is supplied to the respective cylinders 10D, 10E and 10F of the working mechanism 10 from a hydraulic pump (not shown) which is accommodated in the housing cover 8B.

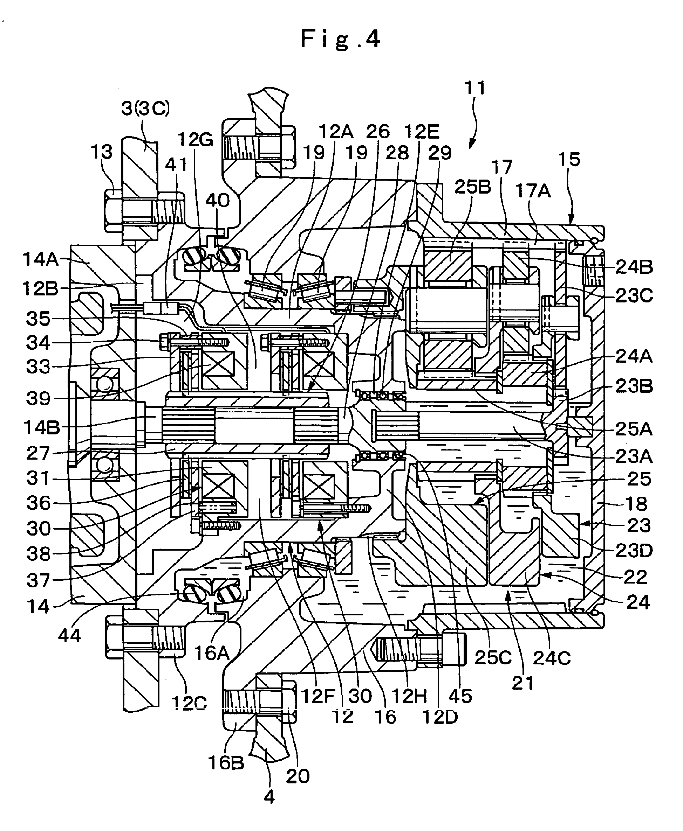

Shown at 11 is a vehicle drive unit of the lower structure 2, a typical example of application of the drum rotating apparatus according to the invention. The vehicle drive unit 11 is provided on each one of the left and right side frames 3B of the truck frame 3. As shown in Figs. 3 and 4, each vehicle drive unit 11 is constituted by a support member 12, an electric motor 14, a drum member 15, a planetary reduction gear mechanism 21 and dry electromagnetic brake or brakes 30.

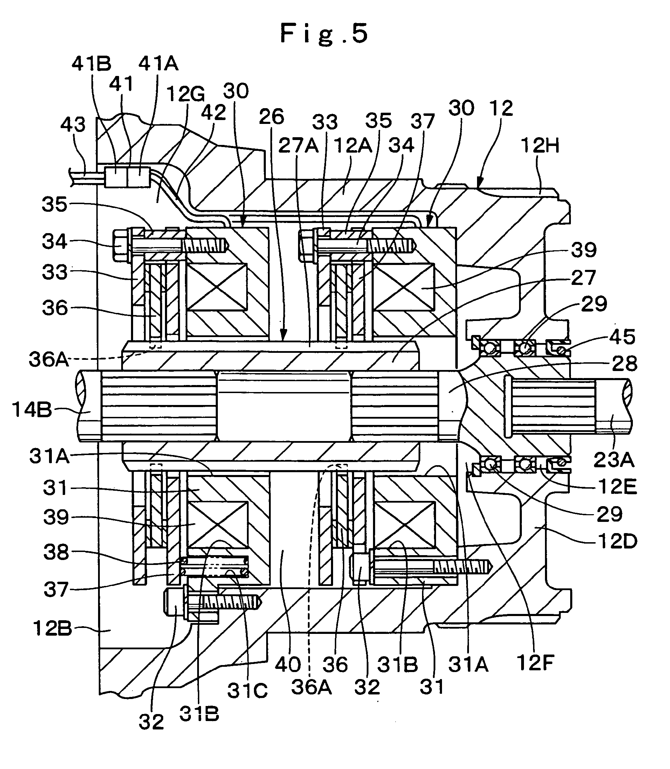

Indicated at 12 is a support member which is fixed on each side frame 3B of the truck frame 3, that is, a basis of the vehicular base carrier. As shown in Figs. 3 to 5, the support member 12 is formed in the shape of a stepped and lidded tube which is extended in the axial direction (in a rightward or leftward direction). In this instance, the support member 12 is provided with an axially extending tubular body portion 12A with an opening 12B at one axial end. An annular flange portion 12C is provided around the opening 12B. As shown in Figs. 3 and 4, the annular flange portion 12C of the support member 12 is fixed to the brackets 3C at the rear end of the side frame 3B by means of bolts 13. On the other hand, the opposite axial end of the tubular body portion 12A is closed with a lid portion 12D which is centrally provided with an axial bore 12E to receive an input shaft 28 (see Fig. 5), which will be described hereinafter.

Further, provided on the inner peripheral side of the tubular body portion 12A is a brake accommodation room 12F to accommodate dry electromagnetic brakes 30 which will be described later on. Further, for accommodation of a connector 41 which will be described hereinafter, a connector accommodation room 12G is provided upward of the dry electromagnetic brakes 30 within the support member 12 which is attached to the truck frame 3. At the other axial end, a spline 12H is formed on the outer periphery of the tubular body portion 12A for meshing engagement with a carrier 25C of a planetary reduction gear mechanism 21 which will be described hereinafter.

Indicated at 14 is a vehicle driving electric motor which is mounted on the side of the opening 12B at one axial end of the support member 12. In this instance, as shown in Fig. 3, the electric motor 14 is an AC motor composed of an output shaft 14B which is rotatably supported within a motor casing 14A and axially extended within the support member 12, a rotor 14C which is provided integrally around the outer periphery of the output shaft 14B, and a stator 14D which is located on the outer peripheral side of the rotor 14C.

To rotate the output shaft 14B, the electric motor 14 receives a power supply from a battery which is accommodated within the housing cover 8B after conversion into alternate current by an inverter or the like (both the battery and inverter are not shown in the drawings). A terminal box 14E is mounted on the upper side of the motor casing 14A, the electric motor 14 including the terminal box 14E is enshrouded in a motor cover 3D of the bracket 3C.

Denoted at 15 is a drum member which is roratably provided on the outer peripheral side of the support member 12. As shown in Figs. 3 and 4, this drum member 15 is formed generally in the shape of a stepped and lidded tube as a whole. In this instance, the drum member 15 is comprised of a large-diameter tubular body 16 with an opening 16A at one axial end, a tubular ring gear 17 which is attached to the other axial end of the tubular body 16 and formed with an internal gear 17A on its inner periphery, and a lid member 18 in the form of a circular disk closing the other axial end of the ring gear 17 liquid tight.

A plural number of bearings 19 are provided between the opening 16A of the tubular body 16 and the outer periphery of the tubular body portion 12A of the support member 12. Thus, the drum member 15 is rotatably supported on and around the outer periphery of the tubular body portion 12A of the support member 12 through the bearings 19. Further, by the use of a plural number of bolts 20, a sprocket 4 is fixed to an annular flange 16B which is provided around the opening 16A of the tubular body 16.

Indicated at 21 is a planetary reduction gear mechanism which is accommodated in the drum member 15. This planetary reduction gear mechanism 21 transmits the rotation of the output shaft 14B of the electric motor 14 to the drum member 15 at a reduced speed to rotate the drum member 15 at a reduced speed and with a large torque. In this instance, as shown in Fig. 4, the planetary reduction gear mechanism 21 is constituted by planetary reduction gear mechanisms 23, 24 and 25 with three speed reduction stages which will be described hereinafter and immersed in lubricant oil 22 which is held in the drum member 15. Thus, the planetary reduction gear mechanism 21 is constantly lubricated by the lubricant oil 22 and can be put in smooth operation over a long period of time.

Designated at 23 is a planetary reduction gear mechanism of the first stage. This planetary reduction gear mechanism 23 is constituted by a sun gear 23B formed integrally on a shaft portion 23A extending axially within the ring gear 17, a plural number of planet gears 23C meshed with the sun gear 23B and the internal gear 17A of the ring gear 17 and put in a revolving movement around the sun gear 23B while spinning on the respective axes, and a carrier 23D rotatably supporting each planet gear 23C through a pin or the like.

Indicated at 24 is a planetary reduction gear mechanism of the second stage. This planetary reduction gear mechanism 24 is constituted by a sun gear 24A splined with the carrier 23D of the first stage, a plural number of planet gears 24B meshed with the sun gear 24A and the internal gear 17A of the ring gear 17 and put in a revolving movement around the sun gear 24A while spinning on the respective axes, and a carrier 24C rotatably supporting each one of the planet gears 24B through a pin or the like.

Indicated at 25 is a planetary reduction gear mechanism of the third stage which will be the final stage. This planetary reduction gear mechanism 25 is constituted by a sun gear 25A splined with the carrier 24C of the second stage, a plural number of planet gears 25B meshed with the sun gear 25A and the internal gear 17A of the ring gear 17, and a carrier 25C rotatably supporting each one of the planet gears 25B through a pin or the like. In this instance, the carrier 25C is meshed with a spline 12H formed around the outer periphery of the support member 12 at the other axial end and fixed relative to the support member 12 in the rotational direction.

Thus, the planetary reduction gear mechanism 25 of the third stage is arranged to transmit to the drum member 15 only the rotations of the planet gears 25B. In this manner, the speed of rotation of the output shaft 14B of the electric motor 14 is reduced by the planetary reduction gear mechanisms 23, 24 and 25 of the respective stages of the planetary reduction gear mechanism 21, and rotation of a reduced speed is transmitted to the ring gear 17 of the drum member 15. In this instance, the drum member 15 is constituted to rotate with a large torque.

Indicated at 26 is a coupling shaft which is provided within the support member 12 and extends in a longitudinal direction and couples the output shaft 14B of the electric motor 14 with the planetary reduction gear mechanism 21. In this instance, as shown in Figs. 4 and 5, the coupling shaft 26 is constituted by a coupling 27 and an input shaft 28, which will be described later on.

Denoted at 27 is a tubular coupling, one axial end of which is connected to the output shaft 14B of the electric motor 14. A male spline 27A is provided on the outer periphery of the coupling 27. At one axial end, the output shaft 14B of the electric motor 14 is splined with the inner periphery of the coupling 27, while the male spline 27A of the coupling 27 is meshed with a rotating disk 36 of each dry electromagnetic brakes 30, which will be described hereinafter.

Denoted at 28 is an input shaft which has one axial end splined with the inner periphery of the coupling 27. The other end of this input shaft 28 is received in an axial bore 12E which is formed in the lid portion 12D of the support member 12. In this instance, a plural number of bearings 29 are provided between the input shaft 28 and the axial bore 12E of the support member 12, so that the input shaft 28 is rotatably supported on the lid portion 12D of the support member 12 through the respective bearings 29. Splined with the other axial end of the input shaft 28 is a shaft portion 23A which is formed integrally with the sun gear 23B of the planetary reduction gear mechanism 23 of the first stage.

Indicated at 30 are a couple of dry electromagnetic brakes which are provided in spaced portions in the axial direction of the support member 12. Each of these dry electromagnetic brakes 30 functions as a parking brake (negative brake) of the hydraulic excavator 1. Namely, each of the dry electromagnetic brakes 30 apply the brakes to the output shaft 14B when the electric motor 14 is at a rest and take off the brakes to the output shaft 14B when the electric motor 14 is in operation.

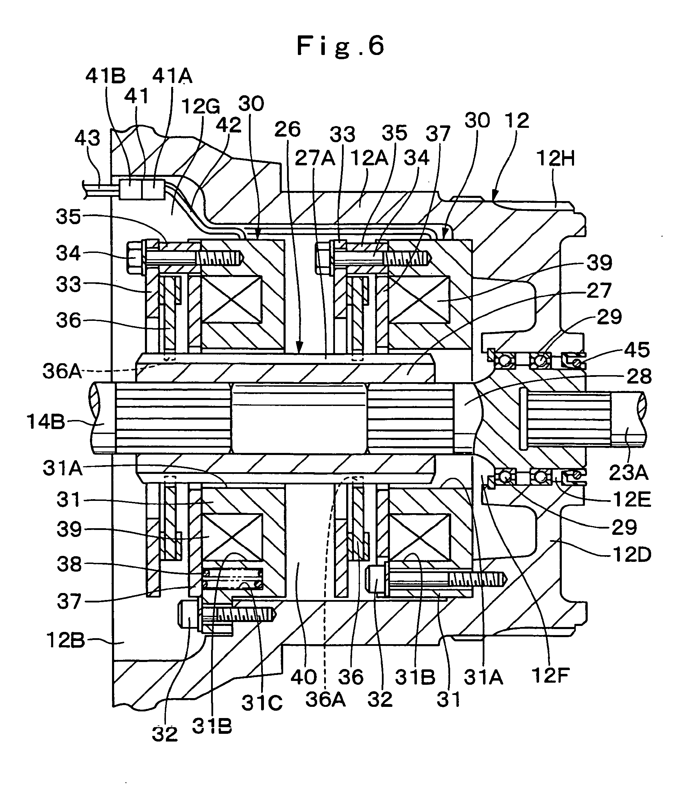

In this instance, as shown in Figs. 5 and 6, each dry electromagnetic brakes 30 are mounted within a brake accommodation room 12F which is provided in the support member 12 around the outer periphery of the coupling 27, and constituted by a yoke member 31, a fixed plate 33, a rotatable disc 36, a non-rotatable disc 37 and an electromagnetic coil 39, which will be described hereinafter.

Indicated at 31 is a yoke member serving as a base of the dry electromagnetic brake 30. This yoke member 31 is formed, for example, by the use of a magnetic material and in the shape of a thick disc having an axial bore 31A at the center. In that case, each one of the yoke members 31 of the respective dry electromagnetic brakes 30 is assembled into the brake accommodation room 12F in the same direction toward the lid portion 12D through and from the side of the opening 12B of the support member 12, and fixed in position by the use of a plural number of bolts 32 (only one bolt is shown in the drawing). The coupling 27 of the coupling shaft 26 is placed in the axial bore 31A in the yoke member 31 in a small gap relation with the latter.

Further, the yoke member 31 is provided with an annular recess 31B in concentric relation with the axial bore 31A, and an electromagnetic coil 39 which will be described later on is accommodated in the recess 31B. Further, the yoke member 31 is provided with a plural number of bottomed holes 31C which is extended in axial direction (only one of which is shown in the drawing) to accommodate coil springs 38, which will be described hereinafter.

Indicated at 33 is a fixed plate in the form of a circular hollow disc, which is provided fixedly on the yoke member 31. The coupling 27 is passed through the fixed plate 33 on the inner peripheral side of the latter. The fixed plate 33 is securely fixed to the yoke member 31 by the use of a plural number of bolts 34 and cylindrical guides 35 (only one of which is shown in the drawing) at a number of radially spaced positions. In this case, the fixed plate 33 is fixed to the yoke member 31 by the bolts 34 having fore end portions threaded into the yoke member 31 through the guides 35.

Indicated at 36 is a rotatable disc which is meshed with the male spline 27A of the coupling 27 and located between the yoke member 31 and the fixed plate 33. In this instance, the rotatable disc 36 is in the form of a hollow circular disc and provided with a female spline 36A on the inner peripheral side. The rotatable disk 36 rotates with the coupling 27 by meshing the female spring 36A with the male spline 27A of the coupling 27.

Designated at 37 is a non-rotatable disc which is mounted displaceably in the axial direction of the coupling 27 between the yoke member 31 and the fixed plate 33. This non-rotatable disc 37 is formed in the shape of a hollow circular disc, and the coupling 27 is passed through the inner peripheral side of the non-rotatable disc 37. The non-rotatable disc 37 functions to grip the rotatable disc 36 in cooperation with the fixed plate 33. In this instance, the non-rotatable disc 37 is locked in a non-rotatable state relative to the coupling 27 by the guides 35 which are passed through outer peripheral portions of the non-rotatable disc 37, but allowed to move in the axial direction of the coupling 27 along the guides 35.

Indicated at 38 are coil springs which are set in a plural number of bottomed holes 31C (only one of which is shown in the drawings) which are bored into the yoke member 31, thereby to constantly press the non-rotatable disc 37 toward the fixed plate 33. When power supply to the electromagnetic coil 39 is cut off, the non-rotatable disc 37 is pressed against and held in frictional engagement with the rotatable disc 36 by the forces of the coil springs 38 as shown in Fig. 5 to restrict rotation of the rotatable disc 36. As a consequence, the brakes are applied to the output shaft 14B of the electric motor 14 which is coupled with the rotatable disc 36 through the coupling 27.

Indicated at 39 is an electromagnetic coil which is accommodated in the recess 31B of the yoke member 31. This electromagnetic coil 39 is supplied with power, for example, simultaneously with the electric motor 14, and thereby excited to magnetically attract the non-rotatable disc 37. As a result, as shown in Fig. 6, the non-rotatable disc 37 is moved away from the rotatable disc 36 against the forces of the coil springs 38, bringing the non-rotatable disc 37 out of frictional engagement with the rotatable disc 36 to put the brakes off the output shaft 14B of the electric motor 14.

Indicated at 40 is a space which is provided within the brake accommodation room 12F of the support member 12. This space 40 is provided between the two dry electromagnetic brakes 30 which are located in axially spaced positions. Heat which is generated by excitation of the electromagnetic coils 39 of the each dry electromagnetic brakes 30 is released to this space 40.

Further, the two dry electromagnetic brakes 30 are accommodated in the support member 12 between the electric motor 14 and the planetary reduction gear mechanism 21. Thus, as shown in Fig. 3, both of the electric motor 14 and the planetary reduction gear mechanism 21 can be located within the width S of the crawler belt 6 (belt width) in the transverse direction.

Indicated at 41 is a connector which is mounted in a connector accommodation room 12G within the support member 12. This connector 41 is composed of a connector member 41A on the side of the brakes and a connector member 41B on the side of the power supply. In this instance, the connector member 41A on the side of the brakes is provided at the distal end of an internal wiring 42 which is connected to the electromagnetic coil 39, while the connector member 41B on the side of the power supply is provided at the distal end of an external wiring 43 which is connected to a power source (not shown). By connecting the connector member 41B on the side of the power supply with the connector member 41A on the side of the brake, the electromagnetic coils 39 of the dry electromagnetic brakes 30 are connected to the power source.

In this instance, the connector accommodation room 12G of the support member 12 is provided upward of the dry electromagnetic brakes 30, so that the connector 41 which is mounted in the connector accommodation room 12G can be kept out of contact with rain water even in the event rain water gets into the support member 12 through an interstice between the electric motor 14 and the support member 12.

Indicated at 44 is a floating seal adopted as a first liquid tight seal member to provide a liquid tight seal between the opening 16A of the tubular body 16 of the drum member 15 and the support member 12. As shown in Fig. 4 and so forth, the floating seal 44 is of an annular shape and placed fully around the opening 16A and the support member 12. The floating seal 44 forms as a liquid tight seal between the fixed support member 12 and rotating drum member 15, sealing up the lubricant oil 22 of the bearings 19 and the planetary reduction gear mechanism 21 within the drum member 15.

Indicated at 45 is a seal ring of U-shape in section adopted as a second seal member for providing a liquid tight seal between the lid portion 12D of the support member 12 and the coupling shaft 26. This seal ring 45 is located between the axial bore 12E in the lid portion 12D and the input shaft 28 of the coupling shaft 26. The seal ring 45 seal between the axial bore 12E and the input shaft 28, preventing the lubricant oil 22 in the drum member 15 from flowing into the brake accommodation room 12F within the support member 12.

Being arranged as described above, the vehicle drive unit 11 of the hydraulic excavator 1 according to the present embodiment gives the following performances in operation.

When the electric motor 14 of the vehicle drive unit 11 is at rest with no power supply thereto, the electromagnetic coil 39 of each dry electromagnetic brakes 30 is also in a de-energized state with no power supply. At this time, as shown in Fig. 5, the non-rotatable disc 37 is pressed toward and urged into frictional engagement with the rotatable disc 36 by the coil springs 38, so that the rotatable disc 36 is gripped between the fixed plate 33 and the non-rotatable disc 37. As a result, the rotatable disc 36 is restricted of rotation, applying the brakes to the output shaft 14B of the electric motor 14 which is connected to the rotatable disc 36 through the coupling 27, to function as a parking brake (a negative brake) of the hydraulic excavator 1.

On the other hand, when power is supplied to the electric motor 14 of the vehicle drive unit 11 to put the hydraulic excavator 1 in travel, power is also supplied to the electromagnetic coil 39 of each dry electromagnetic brakes 30 through the connector 41. At this time, the electromagnetic coils 39 are energized, so that the non-rotatable disc 37 is magnetically attracted toward the electromagnetic coils 39 against spring actions of the coil springs 38, as shown in Fig. 6. As a result, the non-rotatable disc 37 is disengaged from the rotatable disc 36 to take the brakes off the output shaft 14B of the electric motor 14.

Thus, rotation of the output shaft 14B of the electric motor 14 is transmitted to the drum member 15 after the three-stage speed reductions by the planetary reduction gear mechanism 21. The sprocket 4 which fixed on the tubular body 16 of the drum member 15 is put in rotation with a large torque together with the drum member 15. The crawler belt 6 which is meshed with the sprocket 4 is driven to turn around the sprocket 4 and idler 5, putting the hydraulic excavator 1 in travel.

Thus, according to the present embodiment, by the provision of the floating seal 44 which forms a fluid tight seal between the support member 12 and the opening 16A of the drum member 15 (tubular body 16), and the seal ring 45 which forms a liquid tight seal between the axial bore 12E in the lid portion 12D of the support member 12 and the coupling shaft 26 (the input shaft 28), the two dry electromagnetic brakes 30 can be accommodated within the support member 12 in a shielded state from the inflammable lubricant oil 22 held in the drum member 15. Thus, the dry electromagnetic brakes 30 can be used for applying the brakes to the coupling shaft 26 when the electric motor 14 is at rest and take the brakes off the coupling shaft 26 when the electric motor 14 is in rotation.

Further, each one of the dry electromagnetic brakes 30 can be accommodated in a compact form within the support member 12 which is assembled with the electric motor 14 and the planetary reduction gear mechanism 21, permitting to downsize the vehicle drive unit 11 incorporating the dry electromagnetic brakes 30.

Accordingly, as shown in Fig. 3, the electric motor 14 and the planetary reduction gear mechanism 21 can be located within the width S of the crawler belt 6 (belt width) in the transverse direction, preventing the electric motor 14 or the planetary reduction gear mechanism 21 from projecting on the outer side of the crawler belt 6. Therefore, when the hydraulic excavator 1 is traveling on a rough unlevel terrain, for example, the electric motor 14 and planetary reduction gear mechanism 21 can be protected from rocks or other obstacles to ensure higher reliability of the vehicle drive unit 11.

Further, the use of the electric motor 14 in the vehicle drive unit 11 obviates an engine which has thus far been used in a hydraulic motor type vehicle drive unit for driving a hydraulic pump which supplies pressure to a hydraulic motor. That is to say, obviation of an engine means suppression of exhaust gases and noises which are issued from an engine when the hydraulic excavator 1 is in travel, and thus can contribute to improvements of working environment to a significant degree.

Further, according to the present embodiment, a couple of dry electromagnetic brakes 30 are mounted in axially spaced positions within a brake accommodation room 12F within the support member 12. Therefore, when the electric motor 14 is at rest, a large braking force can be applied to the output shaft 14B by the two dry electromagnetic brakes 30, permitting to stop (park) the hydraulic excavator 1 securely.

Besides, a free space 40 is provided between the two dry electromagnetic brakes 30, so that heat which is generated as a result of excitation of the electromagnetic coils 39 of the two dry electromagnetic brakes 30 can be released into the space 40 efficiently. This contributes to enhance the durability of the dry electromagnetic brakes 30 and the reliability of the vehicle drive unit 11.

Further, the two dry electromagnetic brakes 30 are each fixed in the support member 12. That is to say, the two dry electromagnetic brakes 30 can be assembled into the support member 12 prior to assembling the electric motor 14 with the support member 12. This permits to perform an assembling work in an efficient manner.

In this instance, each one of the two dry electromagnetic brakes 30 is assembled into the brake accommodation room 12F within the support member 12 in the same direction toward the lid portion 12D through the opening 12B and fixed in position by the use of a plural number of bolts 32. That is to say, the two dry electromagnetic brakes 30 can be assembled commonly from the same direction relative to the support member 12 and in an efficient manner.

Furthermore, the coupling shaft 26 which couples the output shaft 14B of the electric motor 14 with the planetary reduction gear mechanism 21 is constituted by the coupling 27 and the input shaft 28. Therefore, for example, after coupling the input shaft 28 with the planetary reduction gear mechanism 21, the output shaft 14B of the electric motor 14 can be coupled with the input shaft 28 easily by the coupling 27 in an efficient manner.

Moreover, the connector accommodation room 12G is provided within the support member 12, at a position upward of the dry electromagnetic brakes 30, to accommodate the connector 41 connecting the power supply external wring 43 with the internal wiring 42 which is connected to the electromagnetic coils 39 of the dry electromagnetic brakes 30. Therefore, even if rain water flow into the support member 12 through an interstice between the support member 12 and the electric motor 14, the connector 41 can be kept out of contact with rain water, to enhance operational reliability of the dry electromagnetic brakes 30.

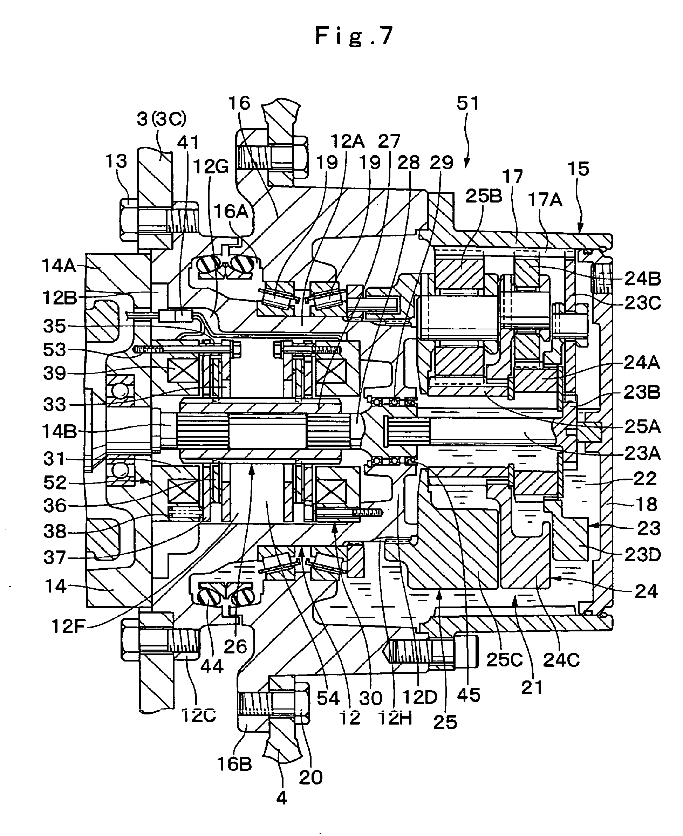

Now, turning to Fig. 7, there is shown an embodiment not forming part of the present invention. This embodiment has a feature in that one of the two electromagnetic brakes which are provided internally of the support member is fixed to the support member, while the other one of the electromagnetic brakes is fixed to the electric motor. In the following description of the second embodiment, those component parts which are identical with the counterparts in the foregoing first embodiment are simply designated by the same reference numerals and characters to avoid repetitions of same explanations.

In the drawing, indicated at 51 is a vehicle drive unit incorporating a drum rotating apparatus of the present embodiment. Substantially in the same way as the vehicle drive unit 11 in the above-described first embodiment, the vehicle drive unit 51 is constituted by a support member 12, an electric motor 14, a drum member 15, a planetary reduction gear mechanism 21 and a couple of dry electromagnetic brakes 30 and 52.

However, this embodiment differs from the first embodiment in that one dry electromagnetic brake 30 is fixed to the support member 12, while the other dry electromagnetic brake 52 is fixed to a motor casing 14A of the electric motor 14.

Indicated at 52 is a dry electromagnetic brake which is provided within a brake accommodation room 12F of the support member 12 together with another dry electromagnetic brake 30. Similarly to the dry electromagnetic brake 30, the dry electromagnetic brake 52 is constituted by a yoke member 31, a fixed plate 33, guides 35, a rotatable disc 36, a non-rotatable disc 37, coil springs 38 and an electromagnetic coil 39.

The dry electromagnetic brake 52 is fixedly mounted within the support member 12 by the use of a plural number of bolts 53 (only one bolt is shown in the drawing) which are passed through the fixed plate 33, guides 35 and the yoke member 31 and threaded into the motor casing 14A of the electric motor 14.

Being arranged as described above, the vehicle drive unit 51 of the present embodiment practically has no difference in particular from the above-described performances of the foregoing first embodiment in performance.

Nevertheless, according to the present embodiment, of the two dry electromagnetic brakes 30 and 52 which are located within the support member 12, one dry electromagnetic brake 30 is fixed to the support member 12 while the other dry electromagnetic brake 52 is fixed to the motor casing 14A of the electric motor 14, providing a broad free space 54 between the two dry electromagnetic brakes 30 and 52 to accelerate release of heat from the two dry electromagnetic brakes 30 and 52 all the more.

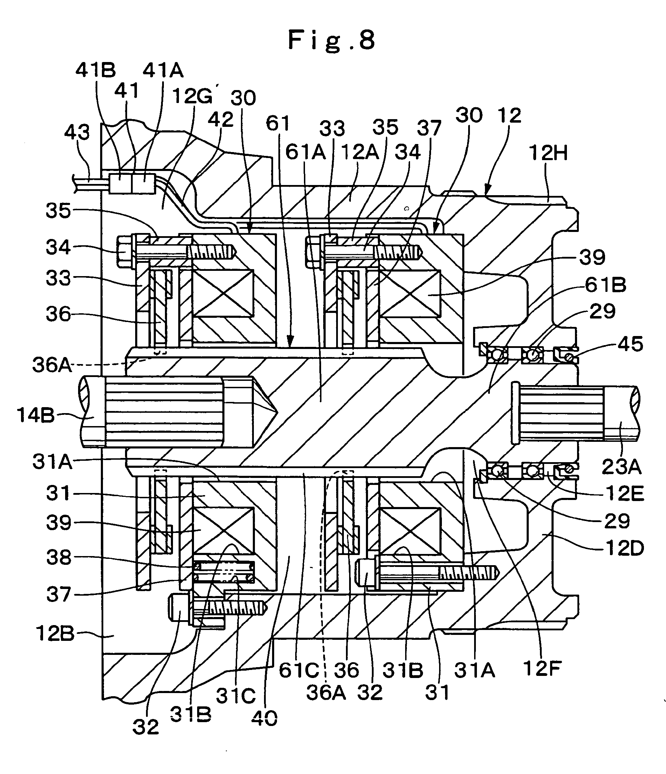

Now, turning to Fig. 8, there is shown a second embodiment of the present invention. This embodiment has a feature in that a coupling shaft which couples an output shaft of an electric motor with a reducer is constituted by one and single member. In the following description of the second embodiment, those component parts which are identical with the counterparts in the foregoing first embodiment are simply designated by the same reference numerals and characters to avoid repetitions of same explanations.

In the drawing, designated at 61 is a coupling shaft which is axially extended in and through a support member 12. This coupling shaft 61 is adapted to couple an output shaft 14B of an electric motor 14 with a planetary reduction gear mechanism 21. In this instance, the coupling shaft 61 is constituted by a single shaft member which has one axial end thereof formed as a coupling portion 61A, and the other axial end as an input shaft portion 61B.

The coupling portion 61A is connected with the output shaft 14B of the electric motor 14, and provided with a spline 61C on its circumferential surface for meshing engagement with rotatable discs 36 of the dry electromagnetic brakes 30. The input shaft portion 61B is splined with a shaft portion 23A on the side of a planetary gear mechanism of the first stage, and rotatably supported in a lid portion 12D of the support member 12 through bearings 29.

Except for the adoption of the coupling shaft 61 which is provided with the coupling portion 61A and the input shaft portion 61B integrally at opposite axial ends as described above, this embodiment is identical with the foregoing first embodiment in other respects.

The present invention has been described by way of an application using a planetary reduction gear mechanism with three reduction stages. However, needless to say, the present invention is not limited to such a planetary reduction gear mechanism, and can be similarly applied to a single stage planetary reduction gear mechanism or to a planetary reduction gear mechanism with two or more than four reduction stages.

Further, in each one of the foregoing embodiments as described above, the vehicle drive unit 11 of the hydraulic excavator 1 has been shown as an example of application of the drum rotating apparatus of the invention. However, the present invention is similarly applicable to other drum rotating apparatus, for example, to rope winches which are mounted on hydraulic cranes. In that case, the drum member is in the form of a take-up drum which is adapted to take up a rope on and around its outer periphery.

## Claims

1. A drum rotating apparatus for use on a construction machine comprising;
a support member (12) of a tubular shape, open at one axial end (12B) and closed with a lid portion (12D) at the other axial end thereof, said support member (12) being securely fixed on a basis of a construction machine;
an electric motor (14) located at one axial end of said support member (12), said electric motor having an output shaft (14B) extended axially toward said support member and being connected to an external power supply to rotate said output shaft;
a drum member (15) of a tubular shape, open at one axial end and closed at the other axial end thereof, said drum member (15) being rotatably supported on outer periphery of said support member (12) at one axial end through bearings (19);
a reduction gear mechanism (21) immersed in a lubricant oil within said drum member (15), said reduction gear mechanism having a single or multiple reduction stages to rotate said drum member at a reduced speed;
a coupling shaft (26,61) extended axially in and through said support member (12), said coupling shaft having one axial end connected to said output shaft (14B) of said electric motor (14) and the other axial end rotatably supported in said lid portion (12D) of said support member (12) and coupled with said reduction gear mechanism (21);
a negative type dry electromagnetic brake (30) accommodated in said support member (12) to apply the brakes to said coupling shaft (26,61) when said electric motor (14) is at rest and take off the brakes to said coupling shaft (26,61) when said electric motor is in rotation;
a first seal member (44) forming a liquid tight seal between said support member (12) and an opening (16A) at one axial end of said drum member (15); and
a second seal member (45) forming a liquid tight seal between said lid portion (12D) of said support member (12) and said coupling shaft (26,61) **characterized in that**:
a couple of said dry electromagnetic brakes (30) accommodated in said support member (12) are provided between said electric motor (14) and said reduction gear mechanism (21) in spaced positions in the axial direction of said coupling shaft (26,61); and
the couple of said dry electromagnetic brakes (30) are adapted to be assembled into said support member (12) commonly in the same direction toward said lid portion (12D) through and from the side of an opening at one axial end of said support member and fixed to said support member respectively.

2. A drum rotating apparatus for use on a construction machine as defined in claim 1, wherein said coupling shaft (26) is composed of a coupling (27) having one axial end connected to said output shaft (14B) of said electric motor (14) and provided with a spline (27A) on the outer periphery thereof, and an input shaft (28) having one axial end thereof connected to said coupling and the other axial end connected to said reduction gear mechanism (21);
said dry electromagnetic brake (30) being comprised of a rotatable disc (36) meshed with said spline (27A) of said coupling (27) for rotation therewith, a non-rotatable disc (37) adapted to be brought into and out of frictional engagement with said rotatable disc (36) by a displacement in an axial direction of said coupling (27), and an electromagnetic coil (39) excited by a power supply from outside to disengage said non-rotatable disc (37) from said rotatable disc.

3. A drum rotating apparatus for use on a construction machine as defined in claim 1, further comprising a connector accommodation room (12G) provided upward of said dry electromagnetic brake (30) within said support member (12) fixed on said basis (1), and a connector (41) mounted in said connector accommodation room (12G) to connect external wiring (43) to internal wiring (42) leading to said dry electromagnetic brake (30).

4. A drum rotating apparatus for use on a construction machine as defined in claim 1, wherein said basis constitutes a truck frame (3) of a crawler type lower structure (2) of said construction machine, said drum member (15) is provided with a sprocket (4) fixedly on the outer periphery thereof for meshing engagement with a crawler belt (6), and both of said electric motor (14) and said reduction gear mechanism (21) are located within a width (S) of said crawler belt (6) in transverse direction.

## Patentansprüche

1. Trommeldrehvorrichtung zur Verwendung bei einer Baumaschine, mit:
einem Tragelement (12) von röhrenartiger Form, das an einem axialen Ende (12B) offen und an seinem anderen axialen Ende mit einem Deckelabschnitt (12D) geschlossen ist, wobei das Tragelement (12) auf einem Gestell einer Baumaschine sicher befestigt ist;
einem Elektromotor (14), der sich an einem axialen Ende des Tragelements (12) befindet, wobei der Elektromotor eine Abtriebswelle (14B) aufweist, die sich zu dem Tragelement hin axial erstreckt, und mit einer externen Stromversorgung verbunden ist, um die Abtriebswelle zu drehen;
einem Trommelelement (15) von röhrenartiger Form, das an einem axialen Ende offen und an seinem anderen axialen Ende geschlossen ist, wobei das Trommelelement (15) auf dem Außenumfang des Tragelements (12) an einem axialen Ende durch Lager (19) drehbar gelagert ist;
einem Reduktionsgetriebemechanismus (21), der in dem Trommelelement (15) in ein Schmieröl eingetaucht ist, wobei der Reduktionsgetriebemechanismus eine einzelne oder mehrfache Reduktionsstufen aufweist, um das Trommelelement mit reduzierter Geschwindigkeit zu drehen;
einer Kuppelwelle (26, 61), die sich axial in und durch das Tragelement (12) erstreckt, wobei bei der Kuppelwelle ein axiales Ende mit der Abtriebswelle (14B) des Elektromotors (14) verbunden ist und das andere axiale Ende drehbar in dem Deckelabschnitt (12D) des Tragelements (12) gelagert und mit dem Reduktionsgetriebemechanismus (21) gekoppelt ist;
einer Negativtyp-Trockenelektromagnetbremse (30), die in dem Tragelement (12) untergebracht ist, um die Bremsen auf die Kuppelwelle (26, 61) anzusetzen, wenn sich der Elektromotor (14) in Ruhestellung befindet, und die Bremsen an der Kuppelwelle (26, 61) abzuheben, wenn sich der Elektromotor in Rotation befindet;
einem ersten Abdichtungselement (44), das eine flüssigkeitsdichte Abdichtung zwischen dem Tragelement (12) und einer Öffnung (16A) an einem axialen Ende des Trommelelements (15) bildet; und
einem zweiten Abdichtungselement (45), das eine flüssigkeitsdichte Abdichtung zwischen dem Deckelabschnitt (12D) des Tragelements (12) und der Kuppelwelle (26, 61) bildet; **dadurch gekennzeichnet, dass**
ein Paar der Trockenelektromagnetbremsen (30), die in dem Tragelement (12) untergebracht sind, zwischen dem Elektromotor (14) und dem Reduktionsgetriebemechanismus (21) in beabstandeten Positionen in der axialen Richtung der Kuppelwelle (26, 61) vorgesehen sind; und
das Paar der Trockenelektromagnetbremsen (30) dazu ausgelegt sind, gemeinsam in der gleichen Richtung zu dem Deckelabschnitt (120) hin durch die und von der Seite einer Öffnung an einem axialen Ende des Tragelements und jeweils an dem Tragelement befestigt zu dem Tragelement (12) zusammengebaut zu werden.

2. Trommeldrehvorrichtung zur Verwendung bei einer Baumaschine nach Anspruch 1, wobei die Kuppelwelle (26) aus einer Kupplung (27), deren eines axiales Ende mit der Abtriebswelle (14B) des Elektromotors (14) verbunden und auf ihrem Außenumfang mit einem Zahn (27A) versehen ist, und einer Antriebswelle (28) besteht, deren eines axiale Ende mit der Kupplung verbunden ist und das andere axiale Ende mit dem Reduktionsgetriebemechanismus (21) verbunden ist;
wobei die Trockenelektromagnetbremse (30) aus einer drehbaren Scheibe (36) besteht, die mit dem Zahn (27A) der Kupplung (27) zur Drehung mit derselben in Eingriff ist, einer nicht-drehbaren Scheibe (37), die dazu ausgelegt ist, mit der drehbaren Scheibe (36) durch eine Verschiebung in axialer Richtung der Kupplung (27) in und außer Reibungseingriff gebracht zu werden, und einer elektromagnetischen Spule (39), die durch eine Stromversorgung von außen angeregt wird, um die nicht-drehbare Scheibe (37) mit der drehbaren Scheibe außer Eingriff zu bringen.

3. Trommeldrehvorrichtung zur Verwendung bei einer Baumaschine nach Anspruch 1, weiterhin mit einem Anschlussaufnahmeraum (12G), der oberhalb der Trockenelektromagnetbremse (30) innerhalb des auf dem Gestell (1) befestigten Tragelements (12) vorgesehen ist, und einem Anschluss (41), der in dem Anschlussaufnahmeraum (12G) angebracht ist, um eine externe Verdrahtung (43) mit einer internen Verdrahtung (42) zu verbinden, die zu der Trockenelektromagnetbremse (30) führt.

4. Trommeldrehvorrichtung zur Verwendung bei einer Baumaschine nach Anspruch 1, wobei das Gestell ein Lkw-Chassis (3) eines Raupentyp-Unterbaus (2) der Baumaschine bildet, das Trommelelement (15) an seinem Außenumfang fest mit einem Kettenzahnrad (4) versehen ist, um mit einem Raupenband (6) in kämmenden Eingriff zu kommen, und sich sowohl der Elektromotor (14) als auch der Reduktionsgetriebemechanismus (21) innerhalb einer Breite (S) des Raupenbands (6) in Querrichtung befinden.

## Revendications

1. Dispositif de rotation de tambour à utiliser sur un engin de chantier comportant :
un élément de support (12) d'une forme tubulaire, ouvert au niveau d'une extrémité axiale (12B) et fermé à l'aide d'une partie de couvercle (12D) au niveau de l'autre extrémité axiale de celui-ci, ledit élément de support (12) étant fixé fermement sur une base d'un engin de chantier,
un moteur électrique (14) positionné au niveau d'une extrémité axiale dudit élément de support (12), ledit moteur électrique ayant un arbre de sortie (14B) étendu axialement vers ledit élément de support et étant relié à un bloc d'alimentation externe pour mettre en rotation ledit arbre de sortie,
un élément de tambour (15) d'une forme tubulaire, ouvert au niveau d'une extrémité axiale et fermé au niveau de l'autre extrémité axiale de celui-ci, ledit élément de tambour (15) étant supporté en rotation sur une périphérie extérieure dudit élément de support (12) au niveau d'une extrémité axiale via des paliers (19),
un mécanisme de réduction de vitesse (21) immergé dans une huile lubrifiante dans ledit élément de tambour (15), ledit mécanisme de réduction de vitesse ayant un seul étage ou de multiples étages de réduction pour mettre en rotation ledit élément de tambour à une vitesse réduite,
un arbre d'accouplement (26, 61) étendu axialement dans ledit élément de support (12) et à travers celui-ci, ledit arbre d'accouplement ayant une extrémité axiale reliée audit arbre d'accouplement (14B) dudit moteur électrique (14) et l'autre extrémité axiale supportée par rotation dans ladite partie de couvercle (12D) dudit élément de support (12) et couplée audit mécanisme de réduction de vitesse (21),
un frein électromagnétique sec de type négatif (30) contenu dans ledit élément de support (12) pour appliquer les freins audit arbre d'accouplement (26, 61) lorsque le ledit moteur électrique (14) est au repos et retirer les freins dudit arbre d'accouplement (26, 61) lorsque ledit moteur électrique est en rotation,
un premier élément d'étanchéité (44) formant un joint étanche liquide entre ledit élément de support (12) et une ouverture (16A) au niveau d'une extrémité axiale dudit élément de tambour (15), et
un second élément d'étanchéité (45) formant un joint étanche liquide entre ladite partie de couvercle (12D) dudit élément de support (12) et ledit arbre d'accouplement (26, 61) **caractérisé en ce que :**
un couple desdits freins électromagnétiques secs (30) contenus dans ledit élément de support (12) est agencé entre ledit moteur électrique (14) et ledit mécanisme de réduction de vitesse (21) dans des positions espacées dans la direction axiale dudit arbre d'accouplement (26, 61), et
le couple desdits freins électromagnétiques secs (30) est adapté pour être assemblé dans ledit élément de support (12) communément dans la même direction vers ladite partie de couvercle (12D) à travers le côté d'une ouverture au niveau d'une extrémité axiale dudit élément de support et à partir de celui-ci et fixé audit élément de support respectivement.

2. Dispositif de rotation de tambour à utiliser sur un engin de chantier comme défini dans la revendication 1, dans lequel ledit arbre d'accouplement (26) est constitué d'un couple (27) ayant une extrémité axiale reliée audit arbre d'accouplement (14B) dudit moteur électrique (14) et muni d'une cannelure (27A) sur la périphérie extérieure de celui-ci, et un arbre d'entrée (28) ayant une extrémité axiale de celui-ci reliée audit couple et l'autre extrémité axiale reliée audit mécanisme de réduction de vitesse (21),
ledit frein électromagnétique sec (30) étant constitué d'un disque rotatif (36) mis en prise avec ladite cannelure (27A) dudit couple (27) en vue d'une rotation avec celui-ci, d'un disque non rotatif (37) adapté pour être engrené et désengrené par frottement avec ledit disque rotatif (36) par l'intermédiaire d'un déplacement dans une direction axiale dudit couple (27), et d'une bobine électromagnétique (19) excitée par un bloc d'alimentation depuis l'extérieur afin de désengrener ledit disque non rotatif (37) dudit disque rotatif.

3. Dispositif de rotation de tambour à utiliser sur un engin de chantier comme défini dans la revendication 1, comportant en outre une salle de réception de connecteur (12G) agencée vers le haut dudit frein électromagnétique sec (30) dans ledit élément de support (12) fixé sur ladite base (1), et un connecteur (41) monté dans ladite salle de réception de connecteur (12G) pour connecter un câble externe (43) au câble interne (42) conduisant audit frein électromagnétique sec (30).

4. Dispositif de rotation de tambour à utiliser sur un engin de chantier comme défini dans la revendication 1, dans lequel ladite base constitue un châssis de chariot (3) d'une structure inférieure de type chenille (2) dudit engin de chantier, ledit élément de tambour (15) est muni d'une roue dentée (4) fixée sur la périphérie extérieure de celui-ci pour être mis en prise avec une courroie de chenille (6), et à la fois ledit moteur électrique (14) et ledit mécanisme de réduction de vitesse (21) sont positionnés dans une largeur (S) de ladite courroie de chenille (6) dans une direction transversale.
